# EUROPÄISCHE PATENTSCHRIFT

(11) **EP 4 405 667 B1**
(45) Veröffentlichungstag und Bekanntmachung des Hinweises auf die Patenterteilung: **03.12.2025**
(21) Anmeldenummer: 22777241.5
(22) Anmeldetag: 19.09.2022
(51) Int. Cl.: G01N 21/85

(54) **TAUCHSONDE MIT VARIABLER PFADLÄNGE**
IMMERSION PROBE HAVING VARIABLE PATH LENGTH
SONDE À IMMERSION PRÉSENTANT UNE LONGUEUR DE TRAJET VARIABLE

(30) Priorität: 20.09.2021 DE 102021210443
(43) Veröffentlichungstag der Anmeldung: 31.07.2024
(73) Patentinhaber: Implen GmbH, 81829 München (DE)
(72) Erfinder: SAHIRI, Thomas, Calabasas, California 91302 (US)
(74) Vertreter: Hoffmann Eitle
(86) Internationale Anmeldenummer: PCT/EP2022/075984
(87) Internationale Veröffentlichungsnummer: WO 2023/041787

(56) Entgegenhaltungen:
- DE-A1- 10 037 778
- DE-A1- 102010 062 268
- JP-A- H04 332 852
- US-A1- 2008 123 094
- US-A1- 2016 186 123

## Beschreibung

### Technisches Gebiet

Die vorliegende Erfindung betrifft das Gebiet der Tauchsonden zur quantitativen und/oder qualitativen Analyse eines Fluids, z.B. einer Flüssigkeit oder eines Gases, mithilfe von Licht, das entlang eines Lichtpfads durch das Fluid hindurchgeleitet wird. Insbesondere betrifft die Erfindung eine Tauchsonde mit variabler Pfadlänge.

### Stand der Technik

Tauchsonden werden u.a. zur Überwachung biochemischer und chemischer Reaktionen eingesetzt. Die Anwendungen liegen hauptsächlich in der Qualitätskontrolle der Produktion und in der Untersuchung biochemischer/chemischer Reaktionsmechanismen durch die Überwachung von Edukten, Produkten und möglichen Zwischenmolekülen als Teil der Erforschung des Reaktionsprozesses. Die spektralen Informationen werden direkt in den Reaktionsgefäßen gewonnen und über optische Fasern an ein Spektralphotometer übertragen. Die Technologie ist zerstörungsfrei, nicht störend, spart Zeit und Kosten und hilft, manuelle/menschliche Fehler zu vermeiden.

Auf dem Gebiet der Tauchsonden ist es demnach bekannt, das Vorhandensein und/oder die Konzentration eines Bestandteils eines Fluids mithilfe der Analyse des durch das Fluid durchtretenden Lichts zu bestimmen. Dabei wird das Licht zunächst durch das Fluid und dann zu einem Spektrometer geführt, in welchem das durchgetretene Licht zum Beispiel durch Absorptionsspektroskopie analysiert wird. Aus den Spektren kann dann der gesuchte Bestandteil identifiziert bzw. seine Konzentration im Fluid bestimmt werden. Derartige Tauchsonden sind beispielsweise aus der US 5,077,481 A oder der US 5,418,614 A bekannt.

Bei diesen bekannten Tauchsonden wird das Licht von einer Lichtquelle mittels Lichtleitern in die Tauchsonde eingeführt und in einen in der Tauchsonde ausgebildeten Probenraum eingekoppelt, in welchem sich das zu analysierende Fluid befindet bzw. durch welchen es durchtreten kann. Die im Strahlengang befindlichen Begrenzungsflächen des Probenraums, beispielsweise optische Fenster, Linsen oder dergleichen, definieren dabei verschiedene fixe Messparameter, vor allem eine feste Pfadlänge des Lichts durch das zu analysierende Fluid, welche für die Auswertung des Signals von Bedeutung sind.

Derartige Tauchsonden mit fester Pfadlänge haben den Nachteil, dass die Messung nur anhand eines Satzes an für die Messung notwendigen Parametern durchgeführt wird. Zu diesen Parametern zählen wie erwähnt in erster Linie die Pfadlänge des Messlichts (Signal- bzw. Anregungslichts) durch das Fluid (i.d.R. eine Flüssigkeit, aber denkbar sind ebenso Gase). Das heißt, dass bei herkömmlichen Tauchsonden die spektrale Intensität des durch die Probe durchgetretenen Lichts nur in Funktion einer Pfadlänge bestimmt wird (unter Zuhilfenahme einer Kalibration, die ebenfalls nur mit einer Pfadlänge erfolgt). Dies beschränkt den dynamischen Messbereich, was insbesondere in der Nähe der Sättigungsgrenze zu Nichtlinearitäten führen kann.

Die genaue Beibehaltung der Pfadlänge während der Messung ist darüber hinaus von wesentlicher Bedeutung für eine genaue quantitative Analyse des gesuchten Bestandteils des Fluids, sodass Abweichungen der Pfadlänge während der Messung oder zwischen Messungen die Genauigkeit des Messergebnisses und somit die zuverlässige quantitative Bestimmung des gesuchten Bestandteils beeinträchtigen. Bei verhältnismäßig langen Pfadlängen mögen Abweichungen hiervon noch nicht groß ins Gewicht fallen, jedoch insbesondere bei hohen Konzentrationen des gesuchten Bestandteils im Fluid müssen verhältnismäßig kleine Pfadlängen eingesetzt werden, bei denen auch nur geringe Abweichungen hiervon das Messergebnis nichtlinear machen und damit die Genauigkeit der Analyse verschlechtern.

Eine Tauchsonde, bei der die Pfadlänge mithilfe mehrerer, jeweils einzeln auf den Sondenkörper (Messkopf) aufgesetzter Probenkammern unterschiedlicher Größe geändert werden kann, ist aus der US 2004/0086214 A1 bekannt. Eine Tauchsonde, bei der die Pfadlänge durch Auswahl unterschiedlicher Distanzstücke zwischen den Lichtleitern und einem Reflektor eingestellt werden kann, ist aus der US 5,185,834 A bekannt. Bei beiden Tauchsonden kann die Pfadlänge jedoch nicht während der Messung im Fluid eingestellt bzw. variiert werden, sodass jede einzelne Messung von dem oben geschilderten Problem betroffen ist, nämlich der Verwendung nur einer Pfadlänge für die Auswertung der aufgezeichneten Spektren. Werden nämlich bei den genannten Dokumenten des Stands der Technik die Probenkammern bzw. Distanzstücke ausgetauscht, verändert sich nicht nur die Pfadlänge, sondern auch weitere Parameter wie die optischen Eigenschaften der Lichtdurchtrittsflächen, sodass eine Integration der unterschiedlichen Ergebnisse nicht möglich ist, ohne weitere Ungenauigkeiten bzw. Fehler in das Messergebnis einzuführen.

Aus der WO 96/12174 A1 ist eine Tauchsonde bekannt, bei der die Lichtleiter und eine auf diesen aufgebrachte Linse, welche zusammen mit einem Reflektor den Probenraum definiert, in Bezug auf diesen Reflektor zwischen einer ersten und zweiten Position axial zu den Lichtleitern und dem Reflektor verstellt werden und so zwei unterschiedliche Pfadlängen realisiert werden. Dabei dient die erste Pfadlänge zur Erzeugung eines Referenzsignals und die zweite Pfadlänge zur Erzeugung eines Analysesignals.

Vom Prinzip her der zuvor genannten WO'174 ähnliche Tauchsonden, bei denen eine optische Faser bzw. Fokussierlinsen in Bezug auf die Rückwand des Probenraums verschoben werden, um so unterschiedliche Pfadlängen zu realisieren, sind aus der WO 21/067565 A1, US 10,976,259 B, oder der DE 10 2017 122125 A1 bekannt.

Eine Tauchsonde, bei der die Spitzen des das Anregungslicht ausstrahlenden bzw. das Signallicht aufnehmenden Lichtleiters gegeneinander verschiebbar sind, um die Pfadlänge zu variieren, ist aus der EP 3 318 714 A1 bekannt.

Tauchsonden, bei denen Prismen bzw. einschiebbare optische Fenster mit abgestuften Flächen verschiedene, aber feste Pfadlängen definieren, sind aus der EP 3 045 521 B1 bzw. der EP 3 365 658 A1 bekannt.

Bei all diesen Konstruktionen ist nachteilig, dass die den Probenraum begrenzenden optischen Flächen senkrecht zur optischen Achse ausgerichtet sind und somit Reflexionen im Strahlengang auftreten, die zu Mehrfachdurchtritten des Lichts durch das zu analysierende Fluid führen und das Signal verfälschen. Außerdem kommt bei Tauchsonden, die gekrümmte Spiegel aufweisen, hinzu, dass das Licht unter verschiedenen Winkeln durch das Fluid im Probenraum tritt und sich die Lage des Fokus in Bezug auf eine oder beide der den Probenraum begrenzenden optischen Flächen verändert, was ebenfalls zu Beeinträchtigungen der Messgenauigkeit führt.

Andere Tauchsonden und alternative Messlösungen sind aus den Dokumenten DE102010062268A1, DE10037778A1, JPH04332852A, US2016186123A1 und US2008123094A1 bekannt.

### Gegenstand der Erfindung

Angesichts dieser oben genannten Nachteile ist es eine Aufgabe der Erfindung, eine Tauchsonde bereitzustellen, die es ermöglicht, die Messgenauigkeit bei der quantitativen und/oder qualitativen Analyse eines Fluids, z.B. einer Flüssigkeit oder eines Gases, mithilfe von Licht zu verbessern. Eine weitere Aufgabe ist es, eine konstruktiv möglichst einfache Tauchsonde bereitzustellen, die es ermöglicht, automatisch Spektren entlang variabler Pfadlängen aufzunehmen.

Diese Aufgabe wird durch den Gegenstand des Anspruchs 1 bzw. des nebengeordneten Anspruchs 14 gelöst. Bevorzugte Ausgestaltungen der Erfindung ergeben sich aus den Unteransprüchen.

Gemäß der Erfindung wird in einem ersten Aspekt eine Tauchsonde zur quantitativen und/oder qualitativen Analyse eines Fluids, z.B. einer Flüssigkeit oder eines Gases, mithilfe von Licht, das entlang eines Lichtpfads durch das Fluid hindurchgeführt wird, bereitgestellt, umfassend einen Messkopf mit
einem Eingangslichtleiter für das zum Fluid geführte Licht, der mit einer Lichtquelle verbindbar ist, und einem Ausgangslichtleiter für das aus dem Fluid geführte Licht, der mit einem Detektor verbindbar ist,
einem ersten und zweiten optischen Fenster, deren einander zugewandte Flächen mit dem Fluid in Kontakt stehen, und
mindestens einer Lichtumlenkeinrichtung, die im Lichtpfad des aus dem Eingangslichtleiter austretenden bzw. in den Ausgangslichtleiter eintretenden Lichts angeordnet ist und das aus dem Eingangslichtleiter kommende Licht durch das erste optische Fenster in das Fluid bzw. das aus dem Fluid kommende Licht zum Ausgangslichtleiter umlenkt,
wobei
das erste und zweite optische Fenster zueinander keilförmig angeordnet sind und ihre zum Keilinneren weisenden Oberflächen dem zu analysierenden Fluid zugewandt sind,
wobei die mindestens eine Lichtumlenkeinrichtung und die optischen Fenster relativ zueinander im Wesentlichen in Richtung der Keilöffnung hin- und her beweglich sind.

Die keilförmig angeordneten optischen Fenster definieren also zwei Seitenflächen eines das Fluid enthaltenden Probenraums, durch welche das Licht entlang des Lichtpfads in das zu analysierende Fluid eintritt bzw. aus ihm austritt. Bewegt man nun die Lichtumlenkeinrichtung und die optischen Fenster relativ zueinander im Wesentlichen in Richtung der Keilöffnung, was bevorzugt kontinuierlich während einer Messung geschieht, verändert sich die Position entlang der Höhenrichtung/Richtung des Keils, an der das Licht auf die optischen Fenster trifft. Das von der Lichtumlenkeinrichtung umgelenkte Licht trifft also auf unterschiedliche Stellen des ersten bzw. zweiten optischen Fensters auf. Da die mindestens eine Lichtumlenkeinrichtung derart beweglich ist, trifft das durch das Fluid getretene Licht auch stets auf eine Lichtumlenkeinrichtung, so dass eine Ausrichtung der Lichtumlenkeinrichtung im Betrieb nicht nötig ist bzw. nur einmal (zum Beispiel werksseitig) durchgeführt werden muss. Dabei ist unter einer Bewegung im Wesentlichen in Richtung der Keilöffnung eine Bewegung zu verstehen, bei der mindestens eine Richtungskomponente der Bewegung parallel zur Winkelhalbierenden der keilförmig angeordneten optischen Fenster ist (bzw. die Bewegung nicht senkrecht zur Winkelhalbierenden erfolgt). Die erfindungsgemäße Relativbewegung hat zur Folge, dass sich auch die Pfadlänge des Lichts zwischen den beiden Fenstern ändert, d.h. die Pfadlänge des Lichts durch das zu analysierende Fluid im Probenraum ändert sich. Somit kann auf einfachste Weise, nämlich lediglich durch eine einfache Relativbewegung der mindestens einen Lichtumlenkeinrichtung in Bezug auf die optischen Fenster, die Pfadlänge durch das Fluid auf kontrollierbare Weise verändert werden, sodass bevorzugt kontinuierlich Spektren mit jeweils unterschiedlichen Pfadlängen aufgezeichnet werden können.

Die erfindungsgemäße Tauchsonde basiert also auf der Grundidee, die Spektren bei mehreren Pfadlängen aufzunehmen und so die Steigung der Funktion I(x), d.h. der Intensität I in Abhängigkeit der Pfadlänge x, zu bestimmen, um eine deutlich höhere Genauigkeit der Messung zu erzielen. Mit anderen Worten ermöglicht es die Erfindung also, durch die Aufnahme von Spektren bei verschiedenen Pfadlängen einen stark erweiterten dynamischen Messbereich im Vergleich zu herkömmlichen Sonden mit fixer Pfadlänge zur Verfügung zu stellen. Außerdem können z.B. präzise Konzentrationsbestimmungen von Bestandteilen des Fluids realisiert werden, indem die Absorbanz in Abhängigkeit von verschiedenen Pfadlängen bestimmt wird.

Ein weiterer Vorteil dieser Anordnung ist, dass aufgrund der einfachen Geometrie der Keilform, die eine genaue Kenntnis des Keilwinkels ermöglicht, die Änderung der Pfadlänge durch das Fluid aus der Länge der Bewegung (Verstellung) der Lichtumlenkeinrichtung bestimmt werden kann.

Schließlich hat die keilförmige Anordnung der Fenster den Vorteil, dass das in den Probenraum eintretende und/oder aus ihm austretende Licht nicht normal (d.h. mit Einfallswinkel 0°) durch das jeweilige Fenster tritt, sondern unter einem Einfallswinkel >0°. Dies verhindert, dass an den optischen Grenzflächen zumindest eines Fensters (ein- oder mehrfach) reflektiertes Licht im Lichtpfad (Strahlengang) bleibt und zu unerwünschten Mehrfachdurchtritten durch das Fluid führt, die das Messergebnis beeinträchtigen.

Die keilförmig angeordneten optischen Fenster können sich berühren bzw. verbunden sein und dabei eine durchgehend keilförmig verlaufende optische Fläche für den Ein- und Austritt des Lichts in das und aus dem Fluid bilden. Bewegt man die Lichtumlenkeinrichtung nun so, dass der Lichtpfad zur Spitze des Keils verlagert wird, sind selbst kleinste Pfadlängen realisierbar, die für die Analyse stark absorbierender Bestandteile in einem Fluid vonnöten sind.

In einer Ausführungsform ist das erste oder das zweite optische Fenster so angeordnet, das das Licht im Wesentlichen normal darauf einfällt. Zum Beispiel kann das erste oder das zweite optische Fenster parallel zur Bewegungsrichtung der mindestens einen Lichtumlenkeinrichtung relativ zu den optischen Fenstern angeordnet sein.

In einer bevorzugten Ausführungsform sind die zueinander keilförmig angeordneten optischen Fenster so im Messkopf vorgesehen, dass die Winkelhalbierende des Keils parallel zur Bewegungsrichtung der mindestens einen Lichtumlenkeinrichtung relativ zu den optischen Fenstern ist.

In einer weiteren Ausführungsform ist im Lichtpfad hinter dem zweiten optischen Fenster ein Reflektor vorgesehen, der das durch das Fluid getretene Licht zurück durch das zweite optische Fenster, durch das Fluid und das erste optische Fenster zur mindestens einen Lichtumlenkeinrichtung reflektiert. Die Tauchsonde nutzt also die Reflektion, um das Licht noch einmal durch das Fluid treten zu lassen und so die Pfadlänge im Vergleich zum einfachen Durchtritt durch das Fluid zu verdoppeln. Die Einkopplung des durch das Fluid getretenen, reflektierten Lichts in den Ausgangslichtleiter erfolgt durch die mindestens eine Lichtumlenkeinrichtung, welche geeignet ist, sowohl das Anregungslicht- als auch Signallicht umzulenken.

Bevorzugt umfasst die mindestens eine Lichtumlenkeinrichtung eine erste und zweite Umlenkeinrichtung. Dabei dient die erste Lichtumlenkeinrichtung der Umlenkung des aus dem Eingangslichtleiter kommenden Lichts durch das erste Fenster in das Fluid und die zweite Lichtumlenkeinrichtung dient der Umlenkung des durch das Fluid hindurchgetretenen Lichts in den Ausgangslichtleiter.

Bevorzugt ist hierbei die zweite Lichtumlenkeinrichtung im Lichtpfad hinter dem zweiten optischen Fenster angeordnet und lenkt das aus dem Fluid durch das zweite optische Fenster getretene Licht zum Eintritt in den Ausgangslichtleiter um. Die Tauchsonde ist also in dieser Ausführungsform für den einfachen Durchtritt des Lichts durch das Fluid eingerichtet, welches anschließend durch die zweite Umlenkeinrichtung zum Ausgangslichtleiter gelenkt und in diesen eingekoppelt wird. Dadurch, dass die zweite Lichtumlenkeinrichtung (im Lichtpfad hinter dem zweiten optischen Fenster) zusammen mit der ersten Lichtumlenkeinrichtung (vor dem ersten optischen Fenster) relativ zu den optischen Fenstern beweglich ist, trifft das durch das Fluid getretene Licht stets auf die zweite Lichtumlenkeinrichtung, auch wenn sich die Pfadlänge des Lichts durch das Fluid ändert.

In einer Variante dieser Ausführungsform ist ein Schaltmechanismus vorgesehen, mithilfe dessen der Reflektor zwischen einer Position im Lichtpfad hinter dem zweiten optischen Fenster und der zweiten Lichtumlenkung und einer Position außerhalb dieses Lichtpfads angeordnet werden kann. Dies ermöglicht es, die Tauchsonde zwischen einer Messung mit einfachem Durchtritt durch das Fluid und einer Messung mit doppeltem Durchtritt umzuschalten.

Bevorzugt ist dabei der Reflektor zusammen mit den Lichtumlenkungen beweglich. Auf diese Weise bleibt relative Positionierung und Ausrichtung zwischen erster Lichtumlenkung, Reflektor und zweiter Lichtumlenkung stets gleich.

Je nach Anordnung können die erste und die zweite Lichtumlenkeinrichtung auf der Seite des ersten optischen Fensters angeordnet sein, zum Beispiel wenn die Tauchsonde einen Reflektor aufweist, der das Licht zweimal durch das Fluid durchtreten lässt, oder die erste Lichtumlenkeinrichtung ist auf der Seite des ersten Fensters angeordnet und die zweite Lichtumlenkeinrichtung ist auf der Seite des zweiten Fensters angeordnet, so dass sie einmal durch das Fluid durchgetretenes Licht zum Ausgangslichtleiter umlenken kann. Es können erfindungsgemäß aber auch weitere Lichtumlenkeinrichtungen vorgesehen werden, zum Beispiel zwei auf Seiten des ersten Fensters und eine auf Seiten des zweiten Fensters. In jedem Fall kann der Fachmann bestimmen, ob auf Seiten des ersten Fensters eine Lichtumlenkeinrichtung für die Umlenkung sowohl des Anregungslichts aus dem Eingangslichtleiter als auch des Signallichts zum Ausganslichtleiter vorgesehen werden soll, oder ob hierfür zwei separate Lichtumlenkeinrichtungen, zum Beispiel eine erste Lichtumlenkeinrichtung für die Umlenkung des Anregungslichts und eine zweite Lichtumlenkeinrichtung für die Umlenkung des Signallichts eingesetzt werden.

In einer bevorzugten Ausführungsform umfasst die Tauchsonde ein oder mehrere Linsen zur optimalen Fokussierung des Anregungslichts entlang des Lichtpfads. Die Linse(n) können dabei besonders bevorzugt am Austritt des Eingangslichtleiters und/oder am Eintritt des Ausgangslichtleiters angeordnet sein. Ebenso denkbar ist eine Anordnung, anstelle oder zusätzlich zur vorigen, an den Lichtumlenkeirichtungen. Andererseits können zur optimalen Fokussierung die Lichtumlenkeinrichtung(en) auch als Konkavspiegel ausgestaltet sein, so dass auf die Linsen verzichtet werden kann.

Bevorzugt umfasst die Tauchsonde eine mit den Lichtumlenkeinrichtungen operativ verbundene Verstelleinrichtung, die die Lichtumlenkeinrichtungen, bevorzugt parallel zur Winkelhalbierenden des Keils, bewegen kann. Diese Verstelleinrichtung ist bevorzugt auch mit dem optionalen Reflektor operativ verbunden.

Die Ausgangs- und Eingangslichtleiter sind in der Regel im Messkopf fixiert. Es ist aber ebenso denkbar, dass auch die Eingangs- und Ausgangslichtleiter mit der mindestens einen Lichtumlenkeinrichtung mitbewegt werden. Hierfür können die Lichtleiter mit der Verstelleinrichtung verbunden werden.

Vorteilhafterweise umfasst die Verstelleinrichtung einen Motor, besonders bevorzugt einen Steppermotor, eine mit einer Welle des Motors gekoppelte Gewindestange und eine mit den Lichtumlenkeinrichtungen gekoppelte Gewindemutter, in welche die Gewindestange eingreift. So können in Kombination mit dem Motor, insbesondere dem Steppermotor, extrem genaue Verstellbewegungen der Lichtumlenkeinrichtungen realisiert werden. Die Gewindemutter kann dabei fest in eine Halteanordnung der Lichtumlenkeinrichtungen integriert sein, die die Lichtumlenkeinrichtungen hält.

Als Verstelleinrichtung kommt gemäß einer alternativen Ausgestaltung aber auch ein Linearmotor in Frage, der direkt mit den Lichtumlenkeinrichtungen gekoppelt ist.

Ferner ist es möglich, aber nicht erforderlich, dass die Tauchsonde eine elektronische Steuerung der Verstelleinrichtung aufweist. Bevorzugt ist jedoch, dass die Verstelleinrichtung von außerhalb der Tauchsonde steuerbar ist. Hierzu ist die Verstelleinrichtung bevorzugt mit einem Detektor, z.B. einem Spektrometer oder Spektrophotometer, oder einem Computer koppelbar, welcher eine elektronische Steuerung der Verstelleinrichtung bereitstellt.

Der Probenraum, der von den keilförmig angeordneten optischen Fenstern entlang des Lichtpfads begrenzt wird, ist bevorzugt offen, so dass Fluid durch den Probenraum fließen kann. Ebenso denkbar ist es aber, den Probenraum schließbar oder geschlossen auszugestalten, um eine definierte Menge an Fluid aufzunehmen.

Das Licht zur Anregung des Fluids im Probenraum ist hierbei bevorzugt Licht im UV, VIS (sichtbaren) oder IR-Bereich.

Die mindestens eine Lichtumlenkeinrichtung ist bevorzugt ein Umlenkprisma, das geeignet ist, das aus dem Eingangslichtleiter kommende Licht um 90° zum ersten optischen Fenster in das Fluid bzw. das aus dem Fluid kommende Licht um 90° zum Ausgangslichtleiter umzulenken. Ebenso denkbar sind aber Umlenkspiegel, z.B. Plan- oder Konkavspiegel als Lichtumlenkeinrichtung. Auch kann die Lichtumlenkeinrichtung ein gebogener Lichtleiter sein, separat oder als Teil der Eingangs- bzw. Ausgangslichtleiter, beispielsweise in Form von gebogenen Lichtleiterenden.

Das optische Fenster, das bevorzugt aus Quarz besteht, stellt in einer bevorzugten Ausführungsform eine mit dem zu analysierenden Fluid in Kontakt stehende Außenfläche des Messkopfes dar.

Gemäß der Erfindung wird in einem zweiten Aspekt eine Tauchsonde zur quantitativen und/oder qualitativen Analyse eines Fluids, z.B. einer Flüssigkeit oder eines Gases, mithilfe von Licht, das entlang eines Lichtpfads durch das Fluid hindurchgeführt wird, bereitgestellt, umfassend einen Messkopf, der zum Eintauchen in das Fluid geeignet ist, mit
einem Eingangslichtleiter für das zum Fluid geführte Licht, der mit einer Lichtquelle verbindbar ist, und einem Ausgangslichtleiter für das aus dem Fluid geführte Licht, der mit einem Detektor verbindbar ist,
einem optischen Fenster und einem Reflektor, deren einander zugewandte Oberflächen mit dem Fluid in Kontakt stehen,
mindestens einer ersten Lichtumlenkeinrichtung, die im Lichtpfad des aus dem Eingangslichtleiter austretenden bzw. in den Ausgangslichtleiter eintretenden Lichts angeordnet ist und das aus dem Eingangslichtleiter kommende Licht durch das erste optische Fenster in das Fluid bzw. das aus dem Fluid kommende Licht zum Ausgangslichtleiter umlenkt,
wobei der Reflektor geeignet ist, das durch das Fluid getretene Licht zurück durch das Fluid und das optische Fenster zur Lichtumlenkeinrichtung bzw. der zweiten Lichtumlenkeinrichtung zu reflektieren,
wobei das optische Fenster und der Reflektor zueinander keilförmig angeordnet sind und ihre zum Keilinneren weisenden Oberflächen dem zu analysierenden Fluid zugewandt sind,
wobei die mindestens eine Lichtumlenkeinrichtung einerseits und das optische Fenster und der Reflektor andererseits relativ zueinander im Wesentlichen in Richtung der Keilöffnung hin- und her beweglich sind.

In diesem Fall (d.h. im Vergleich zum ersten Aspekt der Erfindung) definieren das optische Fenster und der Reflektor die zwei Seitenflächen eines das Fluid enthaltenden Probenraums. Bewegt man die Lichtumlenkeinrichtung einerseits und das optischen Fenster und den Reflektor andererseits relativ zueinander im Wesentlichen in Richtung der Keilöffnung, was wiederum bevorzugt kontinuierlich während einer Messung geschehen kann, verändert sich die Position entlang der Höhenrichtung/Richtung des Keils, an der das Licht auf das optische Fenster bzw. den Reflektor trifft. Das von der Lichtumlenkeinrichtung umgelenkte Licht trifft also auf unterschiedliche Stellen des optischen Fensters bzw. des Reflektors auf. Da die mindestens eine Lichtumlenkeinrichtung beweglich ist, trifft das reflektierte und durch das Fluid getretene Licht auch stets auf die Lichtumlenkeinrichtung, so dass eine Ausrichtung beim Betrieb nicht nötig ist bzw. nur einmal (zum Beispiel werksseitig) durchgeführt werden muss. Dabei ist unter einer Bewegung im Wesentlichen in Richtung der Keilöffnung eine Bewegung zu verstehen, bei der mindestens eine Richtungskomponente der Bewegung parallel zur Winkelhalbierenden der keilförmig angeordneten optischen Fenster ist (bzw. die Bewegung nicht senkrecht zur Winkelhalbierenden erfolgt). Die erfindungsgemäße Relativbewegung hat zur Folge, dass sich auch die Pfadlänge des Lichts zwischen dem optischen Fenster und dem Reflektor ändert, d.h. die Pfadlänge des Lichts durch das zu analysierende Fluid im Probenraum ändert sich. Somit kann auf einfachste Weise, nämlich lediglich durch eine einfache Relativbewegung der Lichtumlenkeinrichtung in Bezug auf das optische Fenster und den Reflektor, die Pfadlänge durch das Fluid auf kontrollierbare Weise verändert werden, sodass bevorzugt kontinuierlich Spektren mit jeweils unterschiedlichen Pfadlängen aufgezeichnet werden können.

Wie beim ersten Aspekt basiert auch die Tauchsonde des zweiten Aspekts auf der Grundidee, die Spektren bei mehreren Pfadlängen aufzunehmen und so die Steigung der Funktion I(x), d.h. der Intensität I in Abhängigkeit der Pfadlänge x, zu bestimmen, um eine deutlich höhere Genauigkeit der Messung zu erzielen. Auch die weiteren Vorteile des ersten Aspekts werden erzielt, zum Beispiel der stark erweiterte dynamische Messbereich im Vergleich zu herkömmlichen Sonden mit fixer Pfadlänge, präzise Konzentrationsbestimmungen von Bestandteilen des Fluids über die Absorbanz in Abhängigkeit von verschiedenen Pfadlängen sowie die genaue Bestimmung der Änderung der Pfadlänge aufgrund der Kenntnis des Keilwinkels und der Länge der Bewegung (Verstellung) der Lichtumlenkeinrichtungen.

Auch in diesem zweiten Aspekt hat die keilförmige Anordnung von optischem Fenster und Reflektor den Vorteil, dass das in den Probenraum eintretende und/oder aus ihm austretende Licht nicht normal (d.h. mit Einfallswinkel 0°) durch das jeweilige Fenster tritt, sondern unter einem Einfallswinkel >0°. Dies verhindert unerwünschte Reflektionen im Lichtpfad (Strahlengang).

Das optische Fenster und der Reflektor können sich berühren bzw. verbunden sein. Bewegt man die Lichtumlenkeinrichtung nun so, dass der Lichtpfad zur Spitze des Keils verlagert wird, sind selbst kleinste Pfadlängen realisierbar, die für die Analyse stark absorbierender Bestandteile in einem Fluid vonnöten sind.

In einer bevorzugten Ausführungsform ist der Reflektor so angeordnet, das das Licht im Wesentlichen normal darauf einfällt. Zum Beispiel kann der Reflektor parallel zur Bewegungsrichtung der Lichtumlenkeinrichtung angeordnet sein.

Bevorzugt umfasst die Tauchsonde eine mit der mindestens einen Lichtumlenkeinrichtung operativ verbundene Verstelleinrichtung, die die mindestens eine Lichtumlenkeinrichtung bewegen kann.

Wie auch in den Ausführungsformen mit zwei optischen Fenstern kann bei diesem Aspekt, bei dem ein optisches Fenster mit einem Reflektor einen Keilwinkel bildet, die mindestens eine Lichtumlenkeinrichtung eine erste und zweite Umlenkeinrichtung umfassen, die in diesem Fall auf der Seite des ersten optischen Fensters angeordnet sind.

### Kurze Beschreibung der Zeichnungen

Im Folgenden wird die erfindungsgemäße Tauchsonde unter Bezug auf die beigefügten Zeichnungen beschrieben, die lediglich beispielhaft und nicht einschränkende Ausführungsformen der vorliegenden Erfindung zeigen:
- Fig. 1: ist eine Schnittansicht einer ersten Ausführungsform der erfindungsgemäßen Tauchsonde, bei der die Lichtumlenkeinrichtungen so in Bezug auf die zueinander keilförmig angeordneten optischen Fenster verstellt bzw. bewegt wurden, dass eine lange Pfadlänge durch das zu analysierende Fluid entsteht,
- Fig. 2: ist eine der Fig. 1 entsprechende Schnittansicht, bei der jedoch die Lichtumlenkeinrichtungen so in Bezug auf die zueinander keilförmig angeordneten optischen Fenster verstellt bzw. bewegt wurden, dass eine kurze Pfadlänge durch das zu analysierende Fluid entsteht,
- Fig. 3a: ist eine Schnittansicht einer zweiten Ausführungsform der erfindungsgemäßen Tauchsonde, hier mit einem optischen Fenster, auf welches das Licht normal einfällt, in einem der Fig. 1 entsprechenden Zustand mit langer Pfadlänge durch das zu analysierende Fluid (Schnittebene A-A der Fig. 3b),
- Fig. 3b: ist die zur Fig. 3a gehörige Draufsicht,
- Fig. 4a: ist eine Schnittansicht der zweiten Ausführungsform der erfindungsgemäßen Tauchsonde in einem der Fig. 2 entsprechenden Zustand mit kurzer Pfadlänge durch das zu analysierende Fluid (Schnittebene B-B der Fig. 4b),
- Fig. 4b: ist die zur Fig. 4a gehörige Draufsicht,
- Fig. 5a: ist eine Schnittansicht einer dritten Ausführungsform der erfindungsgemäßen Tauchsonde, hier mit einem beweglichen Reflektor hinter dem zweiten optischen Fenster, in einem der Fig. 1 entsprechenden Zustand mit langer Pfadlänge durch das zu analysierende Fluid (Schnittebene A-A der Fig. 5c),
- Fig. 5b: ist eine Schnittansicht entlang der Linie C-C der Fig. 5a,
- Fig. 5c: ist die zu Fig. 5a gehörende Draufsicht,
- Fig. 6a: ist eine Schnittansicht der dritten Ausführungsform der erfindungsgemäßen Tauchsonde in einem der Fig. 2 entsprechenden Zustand mit kurzer Pfadlänge durch das zu analysierende Fluid (Schnittebene B-B der Fig. 6c),
- Fig. 6b: ist eine Schnittansicht entlang der Linie D-D der Fig. 6a,
- Fig. 6c: ist die zu Fig. 6a gehörende Draufsicht,
- Fig. 7a: ist eine Schnittansicht einer vierten Ausführungsform der erfindungsgemäßen Tauchsonde, hier mit einem festen Reflektor hinter dem zweiten optischen Fenster, in einem der Fig. 1 entsprechenden Zustand mit langer Pfadlänge durch das zu analysierende Fluid (Schnittebene A-A der Fig. 7c),
- Fig. 7b: ist eine Schnittansicht entlang der Linie C-C der Fig. 7a,
- Fig. 7c: ist die zu Fig. 7a gehörende Draufsicht,
- Fig. 8a: ist eine Schnittansicht der vierten Ausführungsform der erfindungsgemäßen Tauchsonde in einem der Fig. 2 entsprechenden Zustand mit kurzer Pfadlänge durch das zu analysierende Fluid (Schnittebene B-B der Fig. 8c),
- Fig. 8b: ist eine Schnittansicht entlang der Linie D-D der Fig. 8a,
- Fig. 8c: ist die zu Fig. 8a gehörende Draufsicht,
- Fig. 9a: ist eine Schnittansicht eines weiteren Aspekts der erfindungsgemäßen Tauchsonde in einem der Fig. 1 entsprechenden Zustand mit langer Pfadlänge durch das zu analysierende Fluid (Schnittebene A-A der Fig. 9c),
- Fig. 9b: ist eine Schnittansicht entlang der Linie C-C der Fig. 9a,
- Fig. 9c: ist die zu Fig. 9a gehörende Draufsicht,
- Fig. 10a: ist eine Schnittansicht eines weiteren Aspekts der erfindungsgemäßen Tauchsonde in einem der Fig. 1 entsprechenden Zustand mit kurzer Pfadlänge durch das zu analysierende Fluid (Schnittebene B-B der Fig. 10c),
- Fig. 10b: ist eine Schnittansicht entlang der Linie D-D der Fig. 10a,
- Fig. 10c: ist die zu Fig. 10a gehörende Draufsicht.

### Beschreibung der bevorzugten Ausführungsform

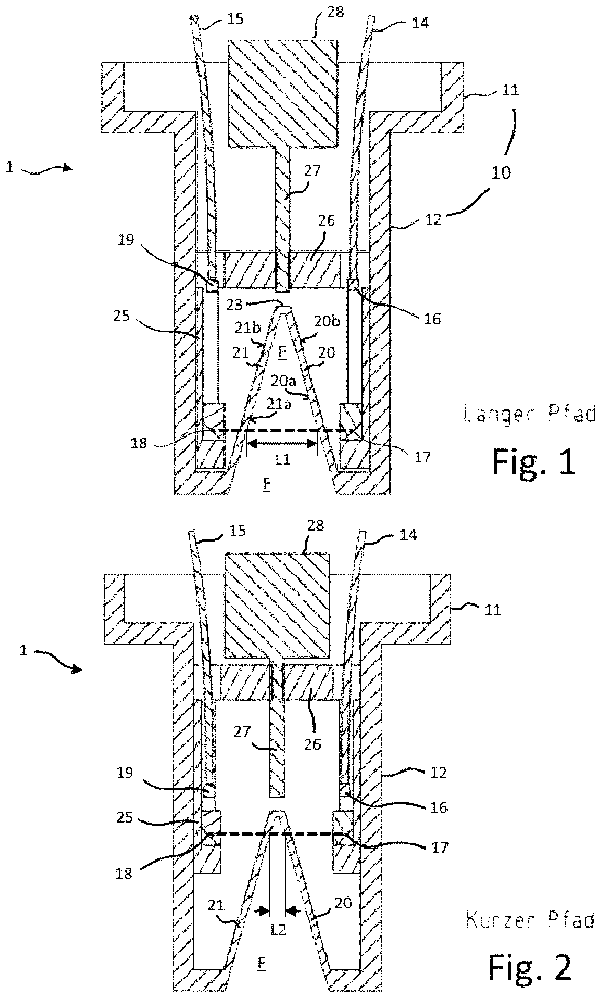

In den Figuren 1 und 2 ist eine erste bevorzugte Ausführungsform der Tauchsonde 1 der vorliegenden Erfindung in einer vertikalen Schnittansicht dargestellt. Die hier verwendeten Richtungsangaben beziehen sich auf eine von oben in ein Fluid eingeführte Tauchsonde. Die Tauchsonde 1 umfasst einen Messkopf 10, welcher in dieser Ausführungsform das Gehäuse der Tauchsonde darstellt und im Wesentlichen einen zylindrischen (horizontalen) Querschnitt aufweist. Andere Querschnittsformen, wie quadratisch, rechteckig, vieleckig, unregelmäßig usw. sind ebenfalls in dieser Ausführungsform berücksichtigt. Der Messkopf 10 ist zum Einführen in ein Fluid, beispielsweise eine Flüssigkeit F bestimmt. Das Fluid kann dabei in Behältern, Rohrleitungen oder auch ohne wesentliche Begrenzungen vorhanden sein. Der Messkopf 10 der Tauchsonde 1 hat an seinem oberen Ende einen Flansch 11, der zur Befestigung an Behälter- oder Rohrwänden geeignet ist. Diese Wände sowie vorzugsweise am Flansch 11 vorhandene Befestigungsmittel, wie zum Beispiel Öffnungen, sind der Einfachheit halber hier nicht dargestellt.

An den Flansch 11 schließt sich nach unten hin ein zylindrischer Schaft 12 an, welcher der Aufnahme eines Eingangslichtleiters 14 und eines Ausgangslichtleiters 15 dient, die beispielsweise als Glasfasern ausgestaltet sein können. Am dem Flansch 11 entgegengesetzten Ende des Schafts 12 sind entlang der vertikalen Längsachse des Messkopfes 10 zwei keilförmig zueinander angeordnete optische Fenster 20, 21 angeordnet, deren zum Keilinneren gerichtete Oberflächen 20a und 21a dem Fluid F zugewandt sind und mit ihm in Kontakt stehen. Im vorliegenden Ausführungsbeispiel sind die beiden optischen Fenster 20, 21 in vertikaler Richtung oben zur Keilspitze 23 verbunden, die auf der Längsachse des Messkopfs liegt. Auch die Winkelhalbierende des Keils liegt auf der Längsachse des Messkopfs. Zwischen den optischen Fenstern 20, 21 befindet sich der Probenraum P, in welchem sich das zu analysierende Fluid F befindet. Denkbar ist jedoch auch eine keilförmige Anordnung, deren Spitze in vertikaler Richtung nach unten orientiert ist. In diesem Fall könnte der Probenraum nach oben hin durch eine zwischen den Schenkeln des Keils angeordnete Wand vom Inneren des Messkopfes 10 (dichtend) abgegrenzt werden.

Der Eingangslichtleiter 14 ist mit seinem einen Ende außerhalb des Messkopfs 10 mit einer nicht gezeigten Lichtquelle verbunden, welche ein für die spektroskopische Analyse des Fluids geeignete Lichtwellenlänge bereitstellt. Das andere Ende des Eingangslichtleiters 14 ist im Schaft 12 des Messkopfes 10 befestigt, zum Beispiel mit konventionellen Mitteln wie Verkleben, Verschrauben usw.

An diesem anderen Ende des Eingangslichtleiters 14 befindet sich eine Linse 16, welche das von der Lichtquelle kommende Anregungslicht bündelt und zu einer Lichtumlenkeinrichtung 17, in der vorliegenden Ausführungsform einem Umlenkprisma 17 leitet, welches den Lichtpfad des Anregungslichts um 90° zum optischen Fenster 20 der keilförmig angeordneten Fenster 20, 21 hin umlenkt.

Dabei tritt das Anregungslicht unter einem nicht-normalen Einfallswinkel (>0°) auf die zum Keiläußeren gerichtete Oberfläche 20b des optischen Fensters 20, sodass eventuelle Reflexionen, die einen zwar geringen, aber nicht vernachlässigbaren Anteil der Eingangslichtleistung ausmachen, aus dem Lichtpfad heraus gelenkt werden und das Messergebnis nicht beeinträchtigen können.

Anschließend tritt das Licht durch die zum Keilinneren gerichtete Oberfläche 20a des optischen Fensters 20 und durch das Fluid im Probenraum P hindurch. Auf der anderen Seite des Lichtpfads L (L1, L2) durch den Probenraum P tritt das Licht durch das andere optische Fenster 21 und gelangt zur Lichtumlenkeinrichtung 18, ebenfalls bevorzugt ein Umlenkprisma 18. Dieses lenkt das durch das Fluid F hindurchgetretene Licht zu einer Linse 19 um, die am unteren Ende des Ausgangslichtleiters 15 angebracht ist. Das obere, aus dem Messkopf 10 nach außen führende Ende des Ausgangslichtleiters 15 ist mit einem hier nicht gezeigten Detektor, beispielsweise einem Spektrometer oder einem Spektralphotometer verbunden, mithilfe dessen das mit dem Fluid F in Wechselwirkung getretene Licht spektroskopisch analysiert werden kann.

Die Umlenkprismen 17,18 sind in Richtung der Keilöffnung hin und her beweglich, im vorliegenden Ausführungsbeispiel parallel zur Winkelhalbierenden des Keils und zur Längsachse des Messkopfs 10, wie in Figuren 1 und 2 gezeigt. Hierzu sind die Umlenkprismen 17,18 in einer Halterung 25 befestigt, die im Inneren des Schafts 12 des Messkopfes 10 beweglich und geführt gelagert ist. Die Halterung 25 umfasst eine Gewindemutter 26, die mit einer Gewindestange in Eingriff steht, welche drehstarr mit der Welle eines Motors 28, im bevorzugten Ausführungsbeispiel eines Steppermotors 28 verbunden ist.

In Figur 1 ist die Tauchsonde in einem Zustand dargestellt, bei dem sich die Umlenkeinrichtungen (Umlenkprismen) 17, 18 in einer in Bezug auf die keilförmig angeordneten optischen Fenster 20,21 unteren Position befinden, sodass der Lichtpfad eine Pfadlänge L1 ("langer Pfad") durch das Fluid F im Probenraum P zu durchlaufen hat. In diesem Zustand bzw. dieser Position kann die Tauchsonde 1 zur Aufnahme eines Spektrums des zu analysierenden Fluids F verwendet werden, dessen Signalintensität I(x) von der Pfadlänge x abhängt, die in Fig. 1 x=L1 beträgt.

Werden wie in Fig. 2 gezeigt die Umlenkprismen 17, 18 nun in Bezug auf die keilförmig angeordneten optischen Fenster 20, 21 nach oben bewegt, beispielsweise indem der Motor 28 aktiviert wurde und über die Kombination Gewindestange 27 und Gewindemutter 26 die Halterung 25 und somit die Umlenkprismen 17 und 18 angehoben wurden, trifft das vom Umlenkprisma 17 umgelenkte Anregungslicht auf einen anderen (hier weiter oben gelegenen) Punkt auf der Oberfläche 20b des optischen Fensters 20, tritt durch das Fluid F im Probenraum P entlang einer Pfadlänge L2 ("kurzer Pfad") und durch das optische Fenster 21 aus dem Probenraum aus, wonach es über das Umlenkprisma 18 zum Ausgangslichtleiter 15 umgelenkt und über die Linse 19 in diesen eingekoppelt wird. Der Ausganglichtleiter leitet das durch das zu analysierende Fluid F hindurchgetretene Licht zu einem Detektor, wo ein Spektrum aufgezeichnet wird, dessen vom Lichtpfad x abhängige Intensität I(x) für einen Lichtpfad x=L2 aufgenommen wird.

Somit ist es mit der erfindungsgemäßen Tauchsonde möglich, durch eine einfache Bewegung, im vorliegenden Beispiel eine Verstellbewegung, der Lichtumlenkeinrichtungen 17,18 die Pfadlänge des Anregungslichts durch das im Probenraum P befindliche Fluid F zu variieren, im vorliegenden Ausführungsbeispiel von der Pfadlänge x=L1 in Figur 1 zur Pfadlänge x=L2 in Figur 2. Selbstverständlich ist die vorliegende Tauchsonde 1 nicht auf die gezeigten 2 Pfadlängen L1 und L2 beschränkt, sondern es sind sämtliche dazwischenliegenden Pfadlängen L1<x<L2 gezielt und kontinuierlich einstellbar.

Hierfür ist bevorzugt eine außerhalb des Messkopfes 10 angeordnete Steuerung (nicht gezeigt) für den Motor 28 vorgesehen, die in Verbindung mit der Lichtquelle und dem Detektor eine Messung vornehmen und dabei die Pfadlänge kontinuierlich variieren kann.

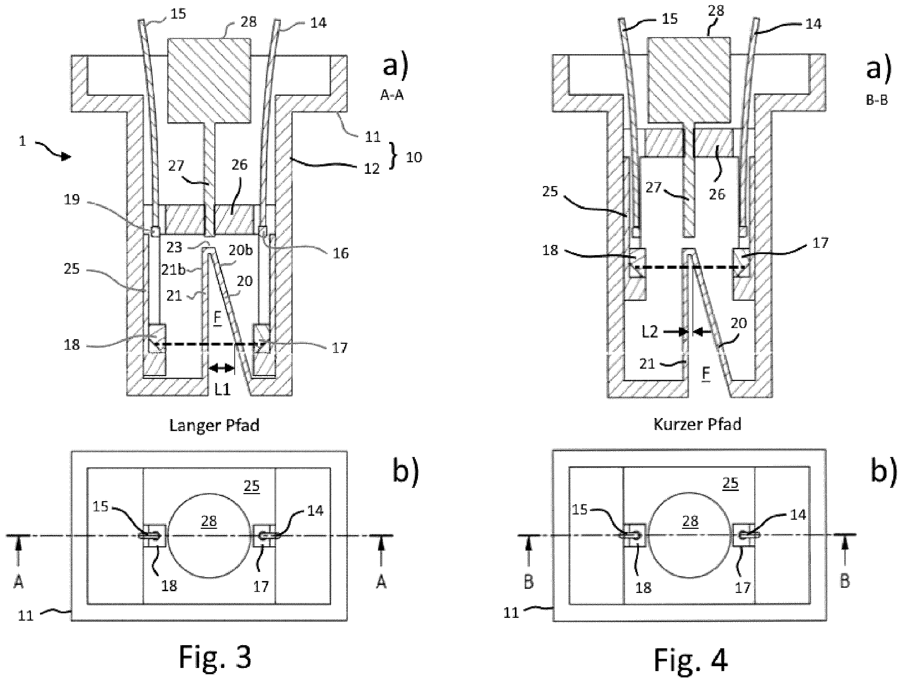

In den Figuren 3a, b und 4a, b ist eine zweite Ausführungsform der erfindungsgemäßen Tauchsonde dargestellt. Der Aufbau dieser Tauchsonde entspricht im Wesentlichen jener der Figuren 1 und 2, so dass gleiche Elemente mit den gleichen Bezugszeichen versehen sind. Aus den Draufsichten der Figuren 3b und 4b lässt sich gut erkennen, dass die Ausgangs- und Eingangslichtleiter 14 und 15 auf die Umlenkprismen 17 und 18 gerichtet sind. Bei dieser Ausführungsform ist das zweite Fenster 21 so angeordnet, dass das vom Umlenkprisma 17 durch das erste Fenster 20 und das Fluid F getretene Licht normal auf das zweite Fenster 21 einfällt. In dieser Ausführungsform ist das zweite Fenster 21 so angeordnet, dass es parallel zur Bewegungsrichtung der Prismen 17, 18 liegt. Die Prismen sind dabei wie zuvor in der Halterung 25 aufgenommen und werden über die Verstelleinrichtung bestehend aus Motor 28, Gewindestange 27 und der an der Halterung 25 angebrachten Gewindemutter 26 bewegt.

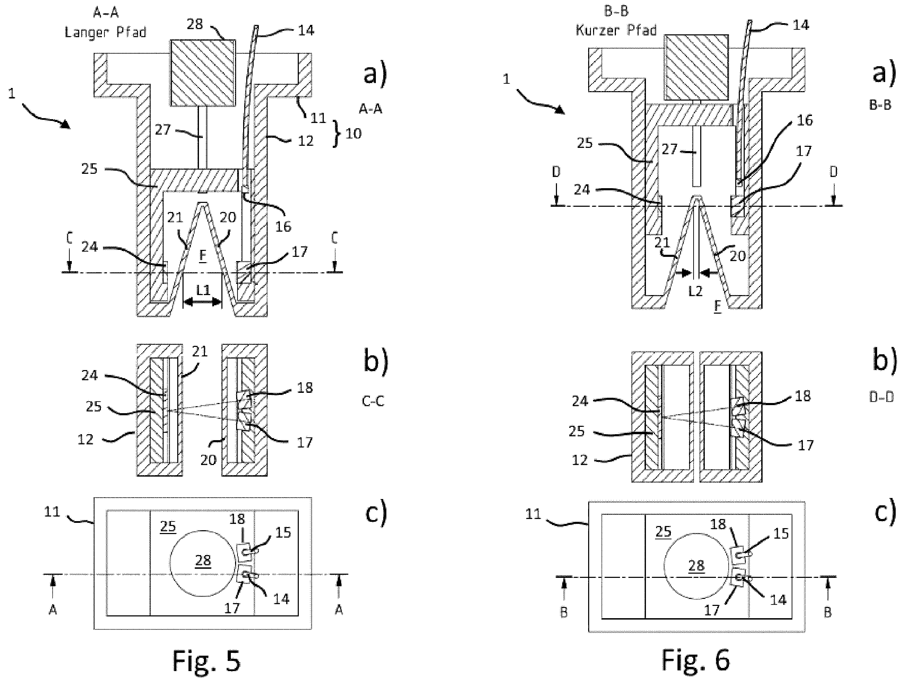

In den Figuren 5a, b, c und 6a, b, c ist eine dritte Ausführungsform der erfindungsgemäßen Tauchsonde dargestellt. Diese Ausführungsform behält die Anordnung der beiden optischen Fenster aus den Fig. 1 und 2 bei, jedoch ist in diesem Fall hinter dem zweiten optischen Fenster 21 ein Reflektor 24 vorgesehen, der das durch das Fluid F getretene Licht zurück durch das zweite optische Fenster 21, erneut durch das Fluid F und das erste optische Fenster 20 zur zweiten Lichtumlenkeinrichtung (Umlenkprisma 18) reflektiert. Diese zweite Lichtumlenkeinrichtung ist in diesem Ausführungsbeispiel direkt neben der ersten Umlenkeinrichtung (Umlenkprisma 17) im Messkopf 10 angeordnet, auf derselben Seite des ersten optischen Fensters 20. Auch der Reflektor 24 ist, wie die Umlenkprismen 17, 18, in der Halterung 25 befestigt und so mithilfe des Verstellmechanismus (Motor 28, Gewindestange 27, Gewindemutter 26) in Bezug auf die optischen Fenster beweglich.

In den Fig. 5b und 6b, die die Umlenkeinrichtungen 17, 18 und den Reflektor 24 jeweils in einer ersten Position (Fig. 5b) und einer zweiten Position (Fig. 6b) zeigen, ist gut zu erkennen, wie der Lichtpfad durch das Fluid bei der Bewegung von der ersten zur zweiten Position verkürzt wird.

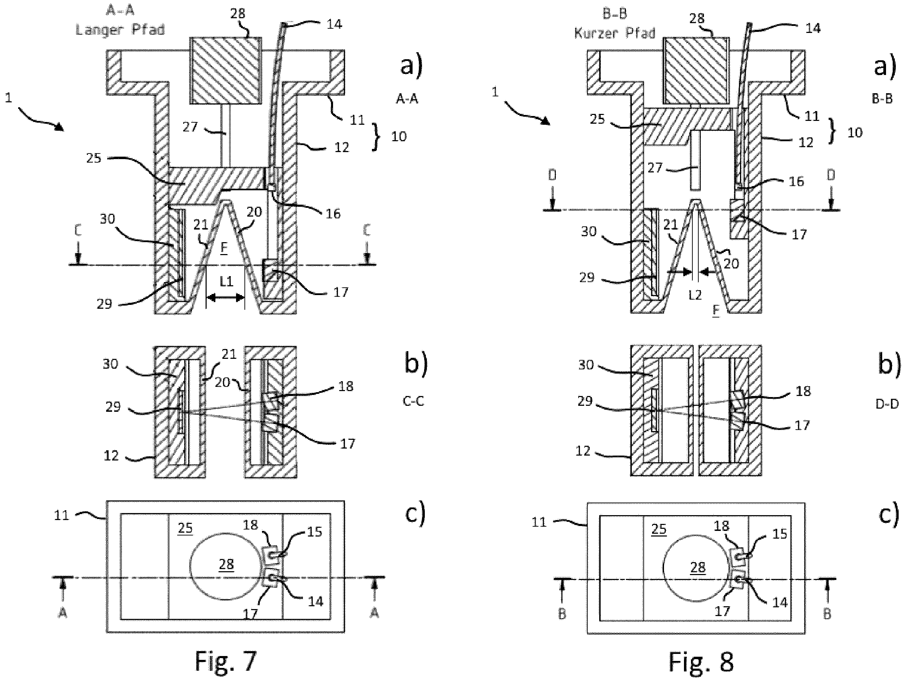

In den Figuren 7a, b, c und 8a, b, c ist eine vierte Ausführungsform der erfindungsgemäßen Tauchsonde dargestellt. Auch diese Ausführungsform behält die Anordnung der beiden optischen Fenster aus den Fig. 1 und 2 bei und wie in den Fig. 5 und 6 ist auch in diesem Fall hinter dem zweiten optischen Fenster 21 ein Reflektor 29 vorgesehen, der das durch das Fluid F getretene Licht zurück durch das zweite optische Fenster 21, erneut durch das Fluid F und das erste optische Fenster 20 zur zweiten Lichtumlenkeinrichtung (Umlenkprisma 18) reflektiert. In diesem Ausführungsbeispiel ist der Reflektor 29 allerdings im Messkopf 10 fixiert, das heißt er bewegt sich nicht zusammen mit den Lichtumlenkeinrichtungen 17, 18. Hierbei besitzt der Reflektor 29 eine Abmessung (Höhe), die im Wesentlichen dem maximalen Verstellweg (der maximalen Bewegungslänge) der Lichtumlenkeinrichtungen 17, 18 entspricht. Der Reflektor 29 ist dabei bevorzugt in einer Reflektorhalterung 30 befestigt, welche im Messkopf 10 angebracht ist und leicht z.B. zu Reinigungszwecken entnommen werden kann. Die zweite Lichtumlenkeinrichtung 18 (Umlenkprisma 18) ist auch in diesem Ausführungsbeispiel direkt neben der ersten Umlenkeinrichtung (Umlenkprisma 17) im Messkopf 10 angeordnet, auf derselben Seite des ersten optischen Fensters 20.

Werden die Lichtumlenkeinrichtungen 17, 18 mithilfe der Verstelleinrichtung aus der in Fig. 7a-c gezeigten Position in die in Fig. 8a-c gezeigte Position bewegt, tritt das Licht an im Vergleich zur vorigen Position unterschiedlichen Stellen durch die optischen Fenster 20, 21 und durch das Fluid F und trifft auf unterschiedliche Stellen auf dem Reflektor 29, an denen es reflektiert wird. Somit werden zwischen den Positionen unterschiedliche Pfadlängen x (L2≤x≤L1) durch das Fluid realisiert, wobei das Licht in diesem Ausführungsbeispiel zweimal durch das Fluid F tritt. Entsprechend den unterschiedlichen Pfadlängen x können somit Pfadlängen-abhängige Spektren mit Intensität I(x) aufgezeichnet werden.

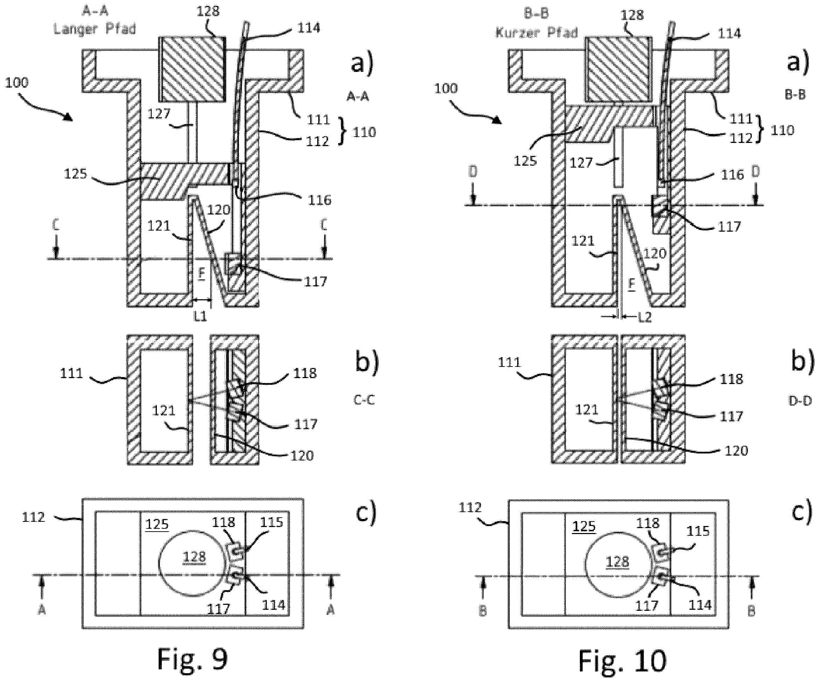

In den Fig. 9a-c und 10a-c ist ein weiterer Aspekt der erfindungsgemäßen Tauchsonde dargestellt. Die Tauchsonde 100 umfasst einen Messkopf 110, der wie in den vorherigen Ausführungsbeispielen einen Flanschabschnitt 111 und einen beispielsweise zylindrischen Abschnitt 112 aufweist. Im Gegensatz zu den zuvor besprochenen Ausführungsformen umfasst die Tauchsonde 100 anstatt des zweiten (lichtdurchlässigen) Fensters einen Reflektor 121, zum Beispiel eine verspiegelte Oberfläche. Dieser Reflektor 121 bildet mit dem ersten optischen Fenster 120 den Keilwinkel. Ansonsten umfasst die Tauchsonde 100 wie die Tauchsonde der Ausführungsformen der Figuren 7 und 8 eine erste und zweite Lichtumlenkeinrichtung (Umlenkprismen) 117,118, die auf derselben Seite des optischen Fensters 120 im Messkopf 110 angeordnet sind. Es ist natürlich ebenso denkbar, dass die erste und zweite Lichtumlenkeinrichtung durch eine einzelne Lichtumlenkeinrichtung ersetzt werden, welche sowohl für die Einkopplung des aus dem Eingangslichtleiter 114 (mit Linse 116) kommenden Lichts durch das optische Fenster 120 in das Fluid F als auch für die Einkopplung des vom Reflektor 121 reflektierten, durch das Fluid F und das Fenster 120 hindurchgetretenen Lichts in den Ausgangslichtleiter 115 (mit Linse 119) geeignet ist. In jedem Fall ist die Lichtumlenkeinrichtung bzw. die erste und zweite Lichtumlenkeinrichtung 117,118 in Bezug auf das optische Fenster 120 und den Reflektor 121 beweglich (in der Figur in vertikaler Richtung) und ist hierzu an einer Halterung 125 einer Verstelleinrichtung befestigt. Auch in diesem Ausführungsbeispiel umfasst die Verstelleinrichtung einen Motor 128, eine Gewindestange 127 und eine an der Halterung 125 vorgesehene Gewindemutter 126. Im Betrieb wird durch die Bewegung der Umlenkungseinrichtungen 117, 118 der Lichtpfad von der in den Figuren 9a-c gezeigten langen Pfadlänge L1 zur in den Figuren 10a-c gezeigten kurzen Pfadlänge L2 verstellt.

Es ist somit mit der oben sowohl allgemein als auch anhand verschiedener Ausführungsbeispiele beschriebenen vorliegenden Erfindung möglich, durch den Vergleich der Intensitäten I(x) der Spektren für unterschiedliche Pfadlängen x die Absorbanz der gesuchten Bestandteile im Fluid F zu bestimmen (sog. "slope spectroscopy") und auf diese Weise besonders genaue Konzentrationsmessungen der gesuchten Bestandteile vorzunehmen.

Des Weiteren wird durch den nicht-normalen Lichteinfall des Anregungslichts sowie des durch die Probe hindurchgetretenen Lichts auf eines oder beide optischen Fenster, die keilförmig zueinander angeordnet sind, die Einkopplung von an den optischen Grenzflächen entstehenden Reflexionen in den Analyselichtpfad vermieden.

Nicht zuletzt bietet die vorliegende Erfindung einen besonders einfachen und wartungsarmen Aufbau, welcher darüber hinaus äußerst zuverlässig und mechanisch robust ausgestaltet werden kann, um den Einsatz der Tauchsonde auch unter extremen Bedingungen zu ermöglichen.

## Patentansprüche

1. Tauchsonde (1) zur quantitativen und/oder qualitativen Analyse eines Fluids (F), z.B. einer Flüssigkeit oder eines Gases, mithilfe von Licht, das entlang eines Lichtpfads durch das Fluid (F) hindurchgeführt wird, umfassend
einen Messkopf (10), der zum Eintauchen in das Fluid (F) geeignet ist, mit
einem Eingangslichtleiter (14) für das zum Fluid (F) geführte Licht, der mit einer Lichtquelle verbindbar ist, und einem Ausgangslichtleiter (15) für das aus dem Fluid (F) geführte Licht, der mit einem Detektor verbindbar ist,
einem ersten und zweiten optischen Fenster (20, 21), deren einander zugewandte Flächen (20a, 21a) mit dem Fluid (F) in Kontakt stehen, und
mindestens einer Lichtumlenkeinrichtung (17, 18), die im Lichtpfad des aus dem Eingangslichtleiter (14) austretenden bzw. in den Ausgangslichtleiter (15) eintretenden Lichts angeordnet ist und das aus dem Eingangslichtleiter (14) kommende Licht durch das erste optische Fenster (20) in das Fluid (F) bzw. das aus dem Fluid (F) kommende Licht zum Ausgangslichtleiter (15) umlenkt,
wobei
das erste und zweite optische Fenster (20, 21) zueinander keilförmig angeordnet sind und ihre zum Keilinneren weisenden Oberflächen (20a, 21a) dem zu analysierenden Fluid (F) zugewandt sind,
wobei die mindestens eine Lichtumlenkeinrichtung (17, 18) und die optischen Fenster (20, 21) relativ zueinander im Wesentlichen in Richtung der Keilöffnung hin- und her beweglich sind.

2. Tauchsonde (1) nach Anspruch 1, wobei die keilförmig angeordneten optischen Fenster (20, 21) verbunden sind und dabei eine durchgehend keilförmig verlaufende optische Fläche für den Ein- und Austritt des Lichts in das und aus dem Fluid (F) bilden.

3. Tauchsonde (1) nach Anspruch 1 oder 2, wobei das erste oder das zweite optische Fenster (20, 21) so angeordnet ist, das das Licht im Wesentlichen normal darauf einfällt.

4. Tauchsonde (1) nach Anspruch 1 oder 2, wobei die zueinander keilförmig angeordneten optischen Fenster (20, 21) so im Messkopf (10) vorgesehen sind, dass die Winkelhalbierende des Keils parallel zur Bewegungsrichtung der mindestens einen Lichtumlenkeinrichtung (17, 18) relativ zu den optischen Fenstern (20, 21) ist.

5. Tauchsonde (1) nach einem der vorangehenden Ansprüche, wobei im Lichtpfad hinter dem zweiten optischen Fenster (21) ein Reflektor (24, 29) vorgesehen ist, der das durch das Fluid (F) getretene Licht zurück durch das zweite optische Fenster (21), durch das Fluid (F) und das erste optische Fenster (20) zur mindestens einen Lichtumlenkeinrichtung (17, 18) reflektiert.

6. Tauchsonde (1) nach einem der vorangehenden Ansprüche, wobei die mindestens eine Lichtumlenkeinrichtung eine erste und zweite Umlenkeinrichtung (17, 18) umfasst.

7. Tauchsonde (1) nach Anspruch 6, wobei die zweite Lichtumlenkeinrichtung (18) im Lichtpfad hinter dem zweiten optischen Fenster (21) angeordnet ist und das aus dem Fluid (F) durch das zweite optische Fenster (21) getretene Licht zum Eintritt in den Ausgangslichtleiter (15) umlenkt.

8. Tauchsonde nach Anspruch 7, wobei ein Schaltmechanismus vorgesehen ist, mithilfe dessen der Reflektor (24, 29) zwischen einer Position im Lichtpfad hinter dem zweiten optischen Fenster (21) und vor der zweiten Lichtumlenkung (18) und einer Position außerhalb dieses Lichtpfads angeordnet werden kann.

9. Tauchsonde nach einem der Ansprüche 5 bis 8, wobei der Reflektor (24) zusammen mit den Lichtumlenkungen (17, 18) beweglich ist.

10. Tauchsonde (1) nach einem der vorangehenden Ansprüche, wobei die Tauchsonde (1) ein oder mehrere Linsen (16, 19) zur optimalen Fokussierung des Anregungslichts entlang des Lichtpfads aufweist.

11. Tauchsonde (1) nach einem der vorangehenden Ansprüche, wobei die Tauchsonde (1) eine mit den Lichtumlenkeinrichtungen (17, 18) operativ verbundene Verstelleinrichtung (26, 27, 28) umfasst, die die Lichtumlenkeinrichtungen (17, 18) bewegen kann.

12. Tauchsonde (1) nach Anspruch 11, wobei die Verstelleinrichtung einen Motor (28), eine mit einer Welle des Motors gekoppelte Gewindestange (27) und eine mit den Lichtumlenkeinrichtungen (17, 18) gekoppelte Gewindemutter (26) umfasst, in welche die Gewindestange (27) eingreift.

13. Tauchsonde (1) nach einem der vorangehenden Ansprüche, wobei die mindestens eine Lichtumlenkeinrichtung ein Umlenkprisma (17, 18) ist, das geeignet ist, das aus dem Eingangslichtleiter (14) kommende Licht um 90° zum ersten optischen Fenster (20) in das Fluid bzw. das aus dem Fluid (F) kommende Licht um 90° zum Ausgangslichtleiter (15) umzulenken.

14. Tauchsonde (100) zur quantitativen und/oder qualitativen Analyse eines Fluids (F), z.B. einer Flüssigkeit oder eines Gases, mithilfe von Licht, das entlang eines Lichtpfads durch das Fluid (F) hindurchgeführt wird, umfassend
einen Messkopf (110), der zum Eintauchen in das Fluid geeignet ist, mit
einem Eingangslichtleiter (114) für das zum Fluid (F) geführte Licht, der mit einer Lichtquelle verbindbar ist, und einem Ausgangslichtleiter (115) für das aus dem Fluid (F) geführte Licht, der mit einem Detektor verbindbar ist,
einem optischen Fenster (120) und einem Reflektor (121), deren einander zugewandte Oberflächen mit dem Fluid (F) in Kontakt stehen,
mindestens einer Lichtumlenkeinrichtung (117, 118), die im Lichtpfad des aus dem Eingangslichtleiter (114) austretenden bzw. in den Ausgangslichtleiter (115) eintretenden Lichts angeordnet ist und das aus dem Eingangslichtleiter (114) kommende Licht durch das erste optische Fenster in das Fluid (F) bzw. das aus dem Fluid (F) kommende Licht zum Ausgangslichtleiter (115) umlenkt,
wobei der Reflektor (121) geeignet ist, das durch das Fluid (F) getretene Licht zurück durch das Fluid (F) und das optische Fenster (120) zur Lichtumlenkeinrichtung (117) bzw. einer zweiten Lichtumlenkeinrichtung (118) zu reflektieren, wobei
das optische Fenster (120) und der Reflektor (121) zueinander keilförmig angeordnet sind und ihre zum Keilinneren weisenden Oberflächen (120a, 121a) dem zu analysierenden Fluid (F) zugewandt sind,
wobei die mindestens eine Lichtumlenkeinrichtung (117, 118) einerseits und das optische Fenster (120) und der Reflektor (121) andererseits relativ zueinander im Wesentlichen in Richtung der Keilöffnung hin- und her beweglich sind.

15. Tauchsonde (100) nach Anspruch 14, wobei der Reflektor (121) so angeordnet ist, das das Licht im Wesentlichen normal darauf einfällt.

16. Tauchsonde (100) nach Anspruch 14 oder 15, wobei die Tauchsonde (100) eine mit der mindestens einen Lichtumlenkeinrichtung (117, 118) operativ verbundene Verstelleinrichtung (126, 127, 128) umfasst, die die mindestens eine Lichtumlenkeinrichtung (117, 118) bewegen kann.

## Claims

1. Immersion probe (1) for the quantitative and/or qualitative analysis of a fluid (F), e.g., a liquid or a gas, using light which is guided through the fluid (F) along a light path, comprising
a measuring head (10) suitable for immersion in the fluid (F), having
an input light guide (14) for the light guided to the fluid (F), which can be connected to a light source, and an output light guide (15) for the light guided out of the fluid (F), which can be connected to a detector,
a first and a second optical window (20, 21), the mutually facing faces (20a, 21a) of which are in contact with the fluid (F), and
at least one light deflection device (17, 18), which is arranged in the light path of the light exiting the input light guide (14) or entering the output light guide (15) and deflects the light coming from the input light guide (14) through the first optical window (20) into the fluid (F) or deflects the light coming from the fluid (F) to the output light guide (15),
wherein
the first and the second optical window (20, 21) are arranged in a wedge shape relative to each other, and their surfaces (20a, 21a) point toward the interior of the wedge face the fluid (F) to be analyzed,
the at least one light deflection device (17, 18) and the optical windows (20, 21) being able to move back and forth relative to each other substantially in the direction of the wedge opening.

2. Immersion probe (1) according to claim 1, wherein the optical windows (20, 21) arranged in a wedge shape are connected and thus form an optical surface which extends continuously in a wedge shape, for the entry and exit of the light into and out of the fluid (F).

3. Immersion probe (1) according to claim 1 or claim 2, wherein the first or the second optical window (20, 21) is arranged such that the light is incident thereon substantially normally.

4. Immersion probe (1) according to claim 1 or claim 2, wherein the optical windows (20, 21) arranged in a wedge shape with respect to each other are provided in the measuring head (10) in such a way that the bisector of the wedge is parallel to the movement direction of the at least one light deflection device (17, 18) relative to the optical windows (20, 21).

5. Immersion probe (1) according to any of the preceding claims, wherein a reflector (24, 29) is provided downstream of the second optical window (21) in the light path and reflects the light, which has passed through the fluid (F), back through the second optical window (21), through the fluid (F) and the first optical window (20), to the at least one light deflection device (17, 18).

6. Immersion probe (1) according to any of the preceding claims, wherein the at least one light deflection device comprises a first and a second deflection device (17, 18).

7. Immersion probe (1) according to claim 6, wherein the second light deflection device (18) is arranged downstream of the second optical window (21) in the light path and deflects the light, which has emerged from the fluid (F) through the second optical window (21), to the entrance to the output light guide (15).

8. Immersion probe according to claim 7, wherein a switching mechanism is provided, by means of which the reflector (24, 29) can be arranged between a position in the light path downstream of the second optical window (21) and upstream of the second light deflection device (18) and a position outside that light path.

9. Immersion probe according to any of claims 5 to 8, wherein the reflector (24) is movable together with the light deflection devices (17, 18).

10. Immersion probe (1) according to any of the preceding claims, wherein the immersion probe (1) has one or more lenses (16, 19) for optimally focusing the excitation light along the light path.

11. Immersion probe (1) according to any of the preceding claims, wherein the immersion probe (1) comprises an adjustment device (26, 27, 28), which is operatively connected to the light deflection devices (17, 18) and can move the light deflection devices (17, 18).

12. Immersion probe (1) according to claim 11, wherein the adjustment device comprises a motor (28), a threaded rod (27) coupled to a shaft of the motor, and a threaded nut (26), which is coupled to the light deflection devices (17, 18) and in which the threaded rod (27) engages.

13. Immersion probe (1) according to any of the preceding claims, wherein the at least one light deflection device is a deflecting prism (17, 18) that is suitable for deflecting the light coming from the input light guide (14) by 90° to the first optical window (20) into the fluid and for deflecting the light coming from the fluid (F) by 90° to the output light guide (15).

14. Immersion probe (100) for the quantitative and/or qualitative analysis of a fluid (F), e.g., a liquid or a gas, using light which is guided through the fluid (F) along a light path, comprising
a measuring head (110) suitable for immersion in the fluid, having
an input light guide (114) for the light guided to the fluid (F), which can be connected to a light source, and an output light guide (115) for the light guided out of the fluid (F), which can be connected to a detector,
an optical window (120) and a reflector (121), the mutually facing surfaces of which are in contact with the fluid (F),
at least one light deflection device (117, 118), which is arranged in the light path of the light exiting the input light guide (114) or entering the output light guide (115) and deflects the light coming from the input light guide (114) through the first optical window into the fluid (F) or deflects the light coming from the fluid (F) to the output light guide (115),
the reflector (121) being suitable for reflecting the light, which has passed through the fluid (F), back through the fluid (F) and the optical window (120), to the light deflection device (117) or a second light deflection device (118),
wherein
the optical window (120) and the reflector (121) are arranged in a wedge shape relative to each other, and their surfaces (120a, 121a) pointing toward the interior of the wedge face the fluid (F) to be analyzed,
the at least one light deflection device (117, 118) on the one hand and the optical window (120) and the reflector (121) on the other hand being able to move back and forth relative to each other substantially in the direction of the wedge opening.

15. Immersion probe (100) according to claim 14, wherein the reflector (121) is arranged such that the light is incident thereon substantially normally.

16. Immersion probe (100) according to claim 14 or claim 15, wherein the immersion probe (100) comprises an adjustment device (126, 127, 128), which is operatively connected to the at least one light deflection device (117, 118) and can move the at least one light deflection device (117, 118).

## Revendications

1. Sonde à immersion (1) pour l'analyse quantitative et/ou qualitative d'un fluide (F), par exemple d'un liquide ou d'un gaz, à l'aide d'une lumière traversant le fluide (F) le long d'un trajet de lumière, comprenant
une tête de mesure (10), qui est adaptée pour être immergée dans le fluide (F) avec un guide de lumière d'entrée (14) pour la lumière dirigée vers le fluide (F), qui peut être relié à une source de lumière, et
un guide de lumière de sortie (15) pour la lumière dirigée hors du fluide (F), qui peut être relié à un détecteur,
une première et une deuxième fenêtres optiques (20, 21) dont les faces (20a, 21a) tournées l'une vers l'autre sont en contact avec le fluide (F), et
au moins un dispositif de déviation de lumière (17, 18), qui est disposé dans le trajet de lumière de la lumière sortant du guide de lumière d'entrée (14) ou entrant dans le guide de lumière de sortie (15) et dévie la lumière provenant du guide de lumière d'entrée (14) à travers la première fenêtre optique (20) dans le fluide (F) ou la lumière provenant du fluide (F) vers le guide de lumière de sortie (15),
dans laquelle les première et deuxième fenêtres optiques (20, 21) sont disposées en forme de coin l'une par rapport à l'autre et leurs surfaces (20a, 21a) orientées vers l'intérieur du coin sont tournées vers le fluide (F) à analyser,
dans laquelle ledit au moins un dispositif de déviation de lumière (17, 18) et les fenêtres optiques (20, 21) sont sensiblement mobiles en va-et-vient les uns par rapport aux autres en direction de l'ouverture en coin.

2. Sonde à immersion (1) selon la revendication 1, dans laquelle les fenêtres optiques (20, 21) disposées en forme de coin sont reliées et forment ainsi une face optique s'étendant en continu en forme de coin pour l'entrée et la sortie de la lumière dans et hors du fluide (F).

3. Sonde à immersion (1) selon la revendication 1 ou la revendication 2, dans laquelle la première ou la deuxième fenêtre optique (20, 21) est disposée de telle sorte que la lumière est incidente sur celle-ci de manière sensiblement normale.

4. Sonde à immersion (1) selon la revendication 1 ou la revendication 2, dans laquelle les fenêtres optiques (20, 21) disposées les unes par rapport aux autres en forme de coin sont prévues dans la tête de mesure (10) de telle sorte que la bissectrice du coin est parallèle à la direction de déplacement de l'au moins un dispositif de déviation de lumière (17, 18) par rapport aux fenêtres optiques (20, 21).

5. Sonde à immersion (1) selon l'une quelconque des revendications précédentes, dans laquelle un réflecteur (24, 29) est prévu dans le trajet de lumière derrière la deuxième fenêtre optique (21), lequel réfléchit la lumière passée par le fluide (F) vers l'arrière à travers la deuxième fenêtre optique (21), à travers le fluide (F) et la première fenêtre optique (20) vers l'au moins un dispositif de déviation de lumière (17, 18).

6. Sonde à immersion (1) selon l'une quelconque des revendications précédentes, dans laquelle l'au moins un dispositif de déviation de lumière comprend un premier et un deuxième dispositif de déviation (17, 18).

7. Sonde à immersion (1) selon la revendication 6, dans laquelle le deuxième dispositif de déviation de lumière (18) est disposé dans le trajet de lumière derrière la deuxième fenêtre optique (21) et dévie la lumière sortie du fluide (F) à travers la deuxième fenêtre optique (21) vers l'entrée dans le guide de lumière de sortie (15).

8. Sonde à immersion selon la revendication 7, dans laquelle un mécanisme de commutation est prévu permettant de disposer le réflecteur (24, 29) entre une position dans le trajet de lumière derrière la deuxième fenêtre optique (21) et devant le deuxième dispositif de déviation de lumière (18) et une position à l'extérieur dudit trajet de lumière.

9. Sonde à immersion selon l'une quelconque des revendications 5 à 8, dans laquelle le réflecteur (24) est mobile conjointement avec les dispositifs de déviation de lumière (17, 18).

10. Sonde à immersion (1) selon l'une quelconque des revendications précédentes, dans laquelle la sonde à immersion (1) présente une ou plusieurs lentilles (16, 19) pour une focalisation optimale de la lumière d'excitation le long du trajet de lumière.

11. Sonde à immersion (1) selon l'une quelconque des revendications précédentes, dans laquelle la sonde à immersion (1) comprend un dispositif de réglage (26, 27, 28) relié de manière opérationnelle aux dispositifs de déviation de lumière (17, 18) qui peut déplacer les dispositifs de déviation de lumière (17, 18).

12. Sonde à immersion (1) selon la revendication 11, dans laquelle le dispositif de réglage comprend un moteur (28), une tige filetée (27) couplée à un arbre du moteur et un écrou fileté (26) couplé aux dispositifs de déviation de lumière (17, 18), avec lequel la tige filetée (27) vient en prise.

13. Sonde à immersion (1) selon l'une quelconque des revendications précédentes, dans laquelle l'au moins un dispositif de déviation de lumière est un prisme de déviation (17, 18) qui est adapté pour dévier la lumière provenant du guide de lumière d'entrée (14) de 90° vers la première fenêtre optique (20) dans le fluide ou la lumière provenant du fluide (F) de 90° vers le guide de lumière de sortie (15).

14. Sonde à immersion (100) pour l'analyse quantitative et/ou qualitative d'un fluide (F), par exemple d'un liquide ou d'un gaz, à l'aide d'une lumière traversant le fluide (F) le long d'un trajet de lumière, comprenant
une tête de mesure (110), qui est adaptée à être immergée dans le fluide, avec un guide de lumière d'entrée (114) pour la lumière dirigée vers le fluide (F), qui peut être relié à une source de lumière, et
un guide de lumière de sortie (115) pour la lumière dirigée hors du fluide (F), qui peut être relié à un détecteur,
une fenêtre optique (120) et un réflecteur (121) dont les surfaces tournées les unes vers les autres sont en contact avec le fluide (F),
au moins un dispositif (117, 118) de déviation de lumière, qui est disposé dans le trajet de lumière de la lumière sortant du guide de lumière d'entrée (114) ou entrant dans le guide de lumière de sortie (115) et qui dévie la lumière provenant du guide de lumière d'entrée (114) à travers la première fenêtre optique dans le fluide (F) ou la lumière provenant du fluide (F) vers le guide de lumière de sortie (115),
dans laquelle le réflecteur (121) est adapté pour réfléchir la lumière passée par le fluide (F) en retour à travers le fluide (F) et la fenêtre optique (120) vers le dispositif de déviation de lumière (117) ou un deuxième dispositif (118) de déviation de lumière,
dans laquelle la fenêtre optique (120) et le réflecteur (121) sont disposés en forme de coin l'un par rapport à l'autre, et leurs surfaces (120a, 121a) orientées vers l'intérieur du coin sont tournées vers le fluide (F) à analyser,
dans laquelle ledit au moins un dispositif (117, 118) de déviation de lumière d'une part et la fenêtre optique (120) et le réflecteur (121) d'autre part sont mobiles en va-et-vient l'un par rapport à l'autre sensiblement en direction de l'ouverture de coin.

15. Sonde à immersion (100) selon la revendication 14, dans laquelle le réflecteur (121) est disposé de telle sorte que la lumière y est incidente de manière sensiblement normale.

16. Sonde à immersion (100) selon la revendication 14 ou la revendication 15, dans laquelle la sonde à immersion (100) comprend un dispositif de réglage (126, 127, 128) relié de manière opérationnelle à l'au moins un dispositif (117, 118) de déviation de lumière, lequel peut déplacer l'au moins un dispositif (117, 118) de déviation de lumière.
